# FASCICULE DE BREVET EUROPEEN

(11) **EP 2 382 263 B1**
(45) Date de publication et mention de la délivrance du brevet: **19.10.2016**
(21) Numéro de dépôt: 09796733.5
(22) Date de dépôt: 22.12.2009
(51) Int. Cl.: C08K 5/25, B60C 15/00

(54) **COMPOSANT DE PNEUMATIQUE SANS CONTACT AVEC L'AIR A BASE DE CAOUTCHOUC NATUREL, D'UNE CHARGE RENFORCANTE ET D'UN DIHYDRAZIDE**
NICHT MIT LUFT IN KONTAKT STEHENDE REIFENKOMPONENTE AUF BASIS VON NATURKAUTSCHUK, EINEM VERSTÄRKENDEN FÜLLSTOFF UND EINEM DIHYDRAZID
TYRE COMPONENT NOT IN CONTACT WITH AIR, BASED ON NATURAL RUBBER, A REINFORCING FILLER AND A DIHYDRAZIDE

(30) Priorité: 23.12.2008 FR 0858991
(43) Date de publication de la demande: 02.11.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: THUILLIEZ, Julien, F-63100 Clermont-Ferrand (FR); DE LANDTSHEER, Stéphanie, Moscou 115184 (RU); CHAUVIN, Brigitte, F-63400 Chamalieres (FR)
(74) Mandataire: Le Cam, Véronique Marie Christine
(86) Numéro de dépôt international: PCT/EP2009/067750
(87) Numéro de publication internationale: WO 2010/072763

(56) Documents cités:
- EP-A- 0 738 754
- EP-A- 1 199 331
- EP-A2- 1 876 203

## Description

La présente invention est relative aux composants du pneumatique qui ne sont pas en contact avec l'air ou avec un gaz de gonflage, notamment ceux qui comprennent des éléments de renfort filaires, et plus particulièrement à leur composition.

Le pneumatique pour véhicule automobile comporte parmi ses constituants des éléments de renforcement ou renforts métalliques ou textiles, généralement sous forme de fil(s) ou d'assemblages de fils, enrobés dans des compositions de caoutchouc spécifiques, réticulables au soufre. Ces associations composites de renforts et de composition de caoutchouc, encore appelées de manière simplifiée "composites renfort/caoutchouc", composent par exemple la nappe de la carcasse ou encore les nappes de sommet du pneumatique.

La composition de caoutchouc de ces composites, encore appelée mélange de calandrage, doit obéir, de manière connue, à un grand nombre d'exigences techniques, souvent antinomiques, parmi lesquelles une exigence de rigidité suffisante tout en maintenant une bonne cohésion du mélange, ainsi qu'une exigence d'un pouvoir collant assurant une bonne adhésion de la composition à l'élément de renfort. L'amélioration combinée de ces propriétés opposées telles que rigidité et adhésion, reste une préoccupation constante des concepteurs de pneumatiques, l'une se faisant généralement au détriment de l'autre en particulier pour les compositions en contact avec des renforts métalliques.

En effet, dans les composites renforts métalliques/caoutchouc, on peut rappeler notamment que le procédé traditionnel pour relier les compositions de caoutchouc à l'acier qui constitue les renforts, consiste à revêtir la surface de l'acier avec du laiton (alliage cuivre-zinc), la liaison entre l'acier et la composition de caoutchouc étant assurée par sulfuration du laiton lors de la vulcanisation. Cette consommation du soufre au détriment de son implication dans la réticulation du caoutchouc, induit une baisse de la rigidité de la composition de caoutchouc.

Pour compenser cette baisse de la rigidité, il est envisageable d'augmenter la quantité de charge renforçante dans la composition de caoutchouc. Malheureusement, l'expérience montre qu'un tel réajustement de la rigidité s'accompagne d'une augmentation importante des pertes hystérétiques de la composition de caoutchouc.

Pour rééquilibrer la proportion de soufre dans la réaction de réticulation, il peut être alors nécessaire d'adapter le système de vulcanisation de ces compositions de caoutchouc particulières notamment par une activation de la vulcanisation. Or, l'augmentation du taux d'accélérateur de vulcanisation, ainsi que l'utilisation d'ultra-accélérateur, sont pénalisants, voire empoisonnants pour la sulfuration. L'acide stéarique dégrade également la bonne tenue de l'interface adhésive. Aussi, préfère-t-on utiliser un système de vulcanisation ne contenant que peu d'accélérateur de vulcanisation et peu d'acide ou d'ester d'acide gras afin de préserver le niveau d'adhésion. Toutefois, de tels systèmes de vulcanisation très décalés ne permettent pas une vulcanisation efficace et ne sont pas sans effet sur les propriétés des compositions de caoutchouc réticulées, notamment sur la rigidité qui est dégradée, et donc sur l'hystérèse qui est sensiblement augmentée.

Soumis à des contraintes très importantes lors du roulage des pneumatiques, notamment à des compressions, flexions ou variations de courbure répétées, les composites renfort/caoutchouc doivent de manière connue satisfaire à un grand nombre de critères techniques tels qu'uniformité, flexibilité, endurance en flexion et en compression, résistance à la traction et à l'usure... Or, les solutions énumérées ci-dessus ont des conséquences qui ne permettent pas de maintenir ces performances à un niveau très élevé aussi longtemps que souhaité.

En effet, les systèmes de vulcanisation fortement déséquilibrés de telles compositions de caoutchouc conduisent à des réticulations peu efficaces qui se traduisent par une hystérèse élevée des compositions. Les niveaux de rigidité généralement élevés requis pour les applications en pneumatiques de telles compositions ne fait qu'amplifier le niveau élevé d'hystérèse subit de par les contraintes de formulation desdites compositions et pénalise souvent les propriétés d'adhésion de la composition de caoutchouc au renfort.

Au vu de ce qui précède, il est un objectif général de fournir des compositions de caoutchouc pour composites renfort/caoutchouc qui satisfassent un compromis de propriétés complexe et acceptable pour un usage en pneumatique.

C'est pourquoi un but de la présente invention est de fournir une composition de caoutchouc pour composites renfort/ caoutchouc qui permette d'atteindre un niveau de rigidité satisfaisant en maintenant une bonne cohésion de la composition sans dégrader le pouvoir collant de celle-ci et conférant des propriétés d'hystérèse acceptables.

Poursuivant leurs recherches, les inventeurs ont découvert que l'adjonction dans une composition de caoutchouc utilisable dans les composites renfort/caoutchouc des pneumatiques de certains composés de type dihydrazide permet d'atteindre, de manière inattendue, un compromis de propriétés rigidité/adhésion/hystérèse/cohésion convenable.

Par ailleurs, les inventeurs ont également mis en évidence que ce type de composés dihydrazides peut avantageusement être utilisé dans des mélanges pour composants du pneumatique adjacents aux composites renfort/caoutchouc. En effet, ce type de composition est susceptible d'engendrer une dégradation du pouvoir collant de la composition en contact avec les éléments de renforts filaires, soit par migration de certains ingrédients de la couche de caoutchouc adjacente vers celle d'un composite renfort/caoutchouc, ou encore par des mouvements de fluage en confection ou en cuisson pouvant créer des contact locaux de cette couche de caoutchouc avec le renfort métallique. Aussi, convient-il que ces couches adjacentes ne contiennent pas de poison pour les composites tout en satisfaisant un compromis de propriétés acceptable pour un usage en pneumatique. Ce qui est le cas avec la composition de caoutchouc selon l'invention. Des exemples de telles couches adjacentes sont les mélanges de bordure des nappes sommets ou nappes carcasse, les mélanges de renfort intérieur des carcasses, les mélanges de remplissage entre les nappes carcasse et les raidisseurs utilisés en zone basse...

Ainsi, un objet de la présente invention est un composant du pneumatique qui n'est pas en contact avec l'air ou avec un gaz de gonflage, caractérisé en ce qu'il comprend une composition de caoutchouc comprenant (a) une matrice élastomérique à base de caoutchouc naturel, (b) une charge renforçante, (c) de plus de 2,5 à 8,5 pce de soufre et (d) un composé dihydrazide répondant à la formule suivante: 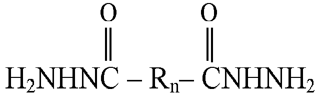 dans laquelle R est un radical hydrocarboné bivalent choisi parmi les radicaux aromatiques, substitués ou non, ayant 6 à 20 atomes de carbone, les radicaux aliphatiques, saturés ou insaturés, linéaires ou ramifiés, ayant 2 à 20 atomes de carbone, et n vaut 0 ou 1, laquelle composition ne comprend pas de copolymère d'isobutylène-paraméthylstyrène-parabromométhylstyrène.

Un autre objet de l'invention est un procédé de fabrication d'un composant du pneu qui n'est pas en contact avec l'air ou avec un gaz de gonflage tel que défini ci-dessus.

L'invention a également pour objet un pneumatique dont au moins un des composants qui n'est pas en contact avec l'air ou avec un gaz de gonflage est un composant tel que défini ci-dessus.

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention a donc pour objet un composant du pneumatique qui n'est pas en contact avec l'air ou avec un gaz de gonflage. Sont donc exclus des composants du pneumatique selon l'invention, la bande de roulement, les flancs, la couche interne ou gomme intérieure ("inner liner").

Selon une variante de l'invention, le composant du pneumatique qui n'est pas en contact avec l'air ou avec un gaz de gonflage est un composant qui comprend en outre un élément de renfort filaire. Plus particulièrement selon cette variante, le composant du pneumatique est un composant comprenant, outre la composition de caoutchouc un renfort métallique.

On peut citer par exemple les nappes sommet, la nappe carcasse, l'ensemble tringle et gomme de tringle.

Selon une autre variante de l'invention, le composant du pneumatique qui n'est pas en contact avec l'air ou avec un gaz de gonflage est une composition ou couche de caoutchouc qui est adjacente, dans le pneumatique, à des composants comportant des éléments de renfort filaires.

La composition de caoutchouc du composant de pneumatique selon l'invention comprend au moins quatre composés, dont un composé dihydrazide répondant à la formule I suivante: 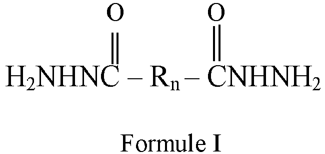 dans laquelle R est un radical hydrocarboné bivalent choisi parmi les radicaux aromatiques substitués ou non, ayant 6 à 20 atomes de carbone, les radicaux aliphatiques, saturés ou insaturés, linéaires ou ramifiés, ayant 2 à 20 atomes de carbone, et n vaut 0 ou 1.

Les composés dihydrazide sont des composés décrits dans l'état de la technique essentiellement pour réduire l'auto échauffement de compositions pour bande de roulement. On peut citer par exemple EP 0 478 274 A1. Les composés dihydrazide ont également été utilisés dans des compositions de caoutchouc destinées à la fabrication de bande de roulement, associés à divers autres composés. Ainsi, par exemple, EP 1 083 199 A1 décrit une composition de bande de roulement comprenant un composé dihydrazide en présence d'un bismaléimide afin d'atténuer les effets négatifs de ce dernier sur les propriétés de la composition de bande de roulement qui le contient. EP 0 761 733 A1 associe la dihydrazide isophtalique à des noirs de carbone spécifiques et des SBR fonctionnalisés dans des compositions de bandes de roulement. EP 0738 754 A1 associe la dihydrazide isophtalique et la dihydrazide isonicotinique à un copolymère isobutylène-paraméthylstyrène-parabromométhylstyrène dans une composition de bande de roulement.

Dans EP 1 199 331 A1, des composés dihydrazides sont cités parmi d'autres hydrazides comme pouvant être utilisés dans des compositions de caoutchouc comprenant des polymaléimides, en vue d'en diminuer l'emballement thermique. Des compositions pour bandes de roulement comprenant le 3-hydroxy-N'- (1,3-butylidene)-2- hydrazide de l'acide naphtoïque et du SBR comme seul élastomère sont illustrées.

Dans JP 2002146110 A, les composés d'une large famille d'hydrazides sont associés à l'hexaméthylène dithiosulfate de sodium dihydraté en vue d'améliorer la résistance à la fissuration sans pénaliser les propriétés d'auto-échauffement. Plus spécifiquement, des compositions à base de caoutchouc naturel comprenant, à titre d'hydrazides, le 3-hydroxy-N'- (1,3-butylidene)-2-hydrazide de l'acide naphtoïque et le 3-hydroxy-2-hydrazide de l'acide naphtoïque sont illustrées.

Selon la présente invention, les composés dihydrazides répondant à la formule I sont de préférence choisis parmi ceux pour lesquels, dans la formule I, R est un radical hydrocarboné bivalent choisi parmi les radicaux aromatiques non substitués, ayant 6 à 14 atomes de carbone, les radicaux aliphatiques saturés linéaires ayant 3 à 12 atomes de carbone.

Plus préférentiellement, ces composés dihydrazides sont choisis parmi dihydrazide phtalique, dihydrazide isophtalique, dihydrazide téréphtalique, dihydrazide succinique, dihydrazide adipique, dihydrazide azelaïque, dihydrazide sébacique, dihydrazide oxalique, dihydrazide dodécanoïque. Encore plus préférentiellement ces composés dihydrazides sont choisis parmi ceux représentés sur les figures ci-après :

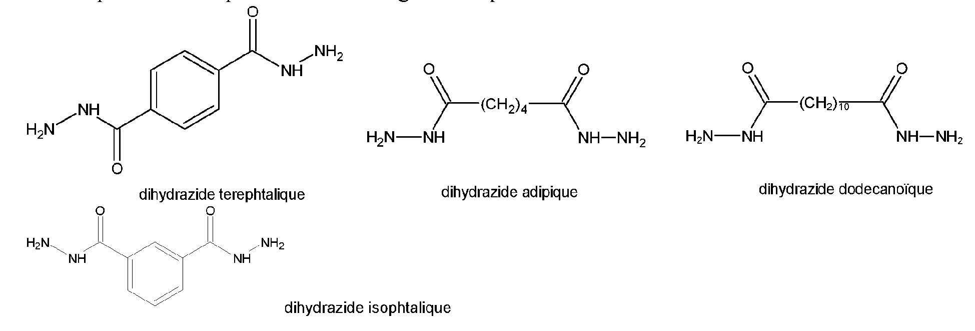

La composition de caoutchouc du composant de pneumatique selon l'invention comprend au moins un composé dihydrazide dans une quantité allant de 0,25 à 7 pce, de préférence de 0,3 à 2 pce.

La composition de caoutchouc du composant de pneumatique selon l'invention comprend au moins quatre composés, dont également une matrice élastomérique.

Les compositions de caoutchouc constituant les composants du pneumatique qui ne sont pas en contact avec l'air ou avec un gaz de gonflage, et plus particulièrement les compositions de caoutchouc qui sont en contact avec les éléments de renfort, sont généralement à base de caoutchouc naturel car sa propriété de collant à cru permet un maintien nécessaire des écarts de fils lors de la conformation du bandage pneumatique cru.

Selon l'invention, la matrice élastomérique de la composition est à base de caoutchouc naturel. Dans certains cas, la matrice élastomérique peut avantageusement être entièrement constituée de caoutchouc naturel (100% de la matrice élastomérique est constituée de caoutchouc naturel). Cette variante est préférentiellement mise en oeuvre lorsque le composant du pneumatique est un composite renfort/caoutchouc, plus particulièrement un composite renfort métallique/caoutchouc.

La matrice élastomérique peut également, outre le caoutchouc naturel, comprendre au moins un autre élastomère diénique.

Ce ou ces autres élastomères diéniques sont alors présents dans la matrice dans des proportions comprise entre 0 et 50 % en poids (les bornes de ce domaine étant exclues), préférentiellement de 5% à 30%.

Dans le cas d'un coupage avec au moins un autre élastomère diénique, la fraction massique du caoutchouc naturel dans la matrice élastomérique est majoritaire et de préférence supérieure à 50% en poids du poids total de la matrice.

On appelle fraction massique majoritaire selon l'invention la fraction massique la plus élevée du coupage. Ainsi, dans un coupage NR/élastomère A/élastomère B, les fractions massiques peuvent être réparties selon 40/40/20 ou 40/30/30, les fractions massiques majoritaires étant 40. Et dans un coupage NR/élastomère, les fractions massiques peuvent être réparties selon 70/30, la fraction massique majoritaire étant 70.

Par élastomère diénique, doit être compris selon l'invention tout caoutchouc naturel fonctionnalisé et tout élastomère synthétique issu au moins en partie de monomères diènes. Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

Le caoutchouc naturel fonctionnalisé selon l'invention est préférentiellement un caoutchouc naturel époxydé (ENR).

L'élastomère diénique constituant une partie de la matrice élastomérique selon l'invention est choisi préférentiellement dans le groupe des élastomères diéniques fortement insaturés constitué par les polybutadiènes (BR), les copolymères de butadiène, les polyisoprènes de synthèse (PI), les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR). Parmi ces copolymères, les copolymères de butadiène et d'un monomère vinylaromatique, plus particulièrement le copolymère de butadiène-styrène (SBR), sont particulièrement préférés.

L'élastomère diénique constituant une partie de la matrice élastomérique selon l'invention peut être étoilé, couplé, fonctionnalisé, de manière connue en soi, au moyen d'un agent de fonctionnalisation, de couplage ou d'étoilage connu de l'homme de l'art. Cet agent peut être à base d'étain par exemple.

La composition de caoutchouc selon l'invention ne comprend pas de copolymère d'isobutylène-paraméthylstyrène-parabromométhylstyrène. En effet, dans certaines applications mélanges internes, ce type de copolymère peut créer des dégradations de l'interface.

La composition de caoutchouc du composant de pneumatique selon l'invention comprend au moins quatre composés, dont également une charge renforçante dans des proportions allant de 30 à 200 pce. De manière préférentielle, le taux de charge renforçante totale est compris entre 40 et 130 pce, plus préférentiellement entre 50 et 120 pce.

On peut utiliser tout type de charge renforçante connue pour ses capacités à renforcer une composition de caoutchouc, par exemple une charge organique tel que du noir de carbone, une charge inorganique renforçante telle que de la silice, ou encore un coupage de ces deux types de charge, notamment un coupage de noir de carbone et de silice. Préférentiellement, selon l'invention, la charge renforçante est majoritairement organique, c'est-à-dire qu'elle comprend plus de 50% en poids du poids total de la charge, d'une ou de plusieurs charges organiques.

Comme noirs de carbone conviennent tous les noirs de carbone, notamment les noirs du type HAF, ISAF, SAF, FF, FEF, GPF et SRF conventionnellement utilisés dans les composition de caoutchouc pour pneumatiques (noirs dits de grade pneumatique). Parmi ces derniers, on citera plus particulièrement les noirs de carbone renforçants des séries 100 à 600 (grades ASTM), comme par exemple les noirs N115, N134, N234, N326, N330, N339, N347, N375 ou les noirs plus grossiers N550, N683. Les noirs de carbone peuvent être par exemple déjà incorporés au caoutchouc naturel sous la forme d'un masterbatch. Comme exemples de charges organiques autres que des noirs de carbone, on peut citer les charges organiques de polyvinylaromatique fonctionnalisé telles que décrites dans les demandes WO-A-2006/069792 et WO-A-2006/069793, ou encore les charges organiques de polyvinyl non aromatique fonctionnalisé telles que décrites dans les demandes WO-A-2008/003434 et WO-A-2008/003435.

Par "charge inorganique renforçante", doit être entendu dans la présente demande, par définition, toute charge inorganique ou minérale quelles que soient sa couleur et son origine (naturelle ou de synthèse), encore appelée charge "blanche" par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Préférentiellement, la charge inorganique renforçante est, en totalité ou tout du moins majoritairement (plus de 50% en poids du poids total de la charge inorganique), de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées. A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles connues de l'homme du métier.

Lorsque la charge renforçante comprend une charge inorganique, la proportion de cette charge inorganique varie entre 0 et 50% en poids par rapport au poids total de la charge renforçante, de préférence de 5 à 40%.

La proportion de charge organique dans la charge renforçante varie de plus de 50% à 100% en poids par rapport au poids total de la charge renforçante, et est de préférence supérieure à 60%.

La composition de caoutchouc selon l'invention comprend en outre, de manière classique, lorsque la charge renforçante comprend une charge inorganique, un agent de liaison charge inorganique renforçante / matrice élastomère.

Par agent de liaison, on entend plus précisément un agent apte à établir une liaison suffisante de nature chimique et/ou physique entre la charge considérée et l'élastomère, tout en facilitant la dispersion de cette charge au sein de la matrice élastomère. Un tel agent de liaison, au moins bifonctionnel, a par exemple comme formule générale simplifiée "Y-T-X' ", dans laquelle :
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (-OH) de surface de la charge inorganique (par exemple les silanols de surface lorsqu'il s'agit de silice);
- X' représente un groupe fonctionnel (fonction " X' ") capable de se lier physiquement et/ou chimiquement à l'élastomère, par exemple par l'intermédiaire d'un atome de soufre;
- T représente un groupe divalent permettant de relier Y et X'.

Les agents de liaison ne doivent pas être confondus avec de simples agents de recouvrement de la charge considérée qui, de manière connue, peuvent comporter la fonction Y active vis-à-vis de la charge mais sont dépourvus de la fonction X' active vis-à-vis de l'élastomère. On peut utiliser tout agent de liaison connu pour, ou susceptible d'assurer efficacement dans les compositions de caoutchouc utilisables pour la fabrication de pneumatiques, la liaison (ou le couplage) entre une charge inorganique renforçante telle que de la silice et un élastomère diénique, comme par exemple des organosilanes, notamment des alkoxysilanes polysulfurés ou des mercaptosilanes, ou encore des polyorganosiloxanes porteurs des fonctions X' et Y précitées. Des agents de liaison silice/élastomère, notamment, ont été décrits dans un grand nombre de documents, les plus connus étant des alkoxysilanes bifonctionnels tels que des alkoxysilanes polysulfurés.

Dans les compositions conformes à l'invention, le taux d'agent de liaison est avantageusement inférieur à 20 pce, étant entendu qu'il est en général souhaitable d'en utiliser le moins possible. Son taux est préférentiellement compris entre 0,5 et 12 pce. La présence de l'agent de liaison dépend de celle de la charge inorganique renforçante. L'homme du métier saura ajuster le taux d'agent de liaison nécessaire en fonction de celui de la charge inorganique utilisée.

La composition de caoutchouc du composant de pneumatique selon l'invention comprend au moins quatre composés, dont également le soufre ou un composé donneur de soufre, dont la proportion en soufre élémentaire est supérieure à 2,5 pce et pouvant atteindre 8,5 pce.

Le soufre est un élément indispensable à la vulcanisation du caoutchouc. En outre, dans les compositions de caoutchouc destinées à être mises en contact avec des renforts filaires notamment métalliques, une partie du soufre est consommé dans la formation d'une interface d'accrochage entre la gomme et le métal. Aussi, le soufre est-il présent dans les compositions de caoutchouc selon l'invention, destinées à la préparation de composites renfort/caoutchouc ou couches adjacentes, dans des proportions supérieures à celles habituellement utilisées dans des compositions pour bandes de roulement par exemple.

Dans la composition de caoutchouc du composant de pneumatique selon l'invention, le soufre élémentaire est de préférence présent dans des proportions allant de 3,5 à 7 pce. Outre le soufre, la composition de caoutchouc selon l'invention peut comprendre d'autres ingrédients qui constituent le système de réticulation. Parmi ces ingrédients, on peut citer les activateurs de vulcanisation, en particulier l'oxyde de zinc seul ou utilisé avec des acides gras ou des esters d'acides gras, comme l'acide stéarique ou des stéarates, et les accélérateurs de vulcanisation, en particulier du type sulfénamide.

Etant donné la spécificité de la composition de caoutchouc selon l'invention, l'ensemble des accélérateurs de type sulfénamide et activateurs de vulcanisation est utilisé à un taux préférentiel compris entre 4 et 16 pce, plus préférentiellement compris entre 4.5 et 15.5 pce. Notamment, le taux d'accélérateurs de type sulfénamide est utilisé à un taux préférentiel compris entre 0.4 et 1.2 pce. Par ailleurs, le taux d'oxyde de zinc est de préférence compris dans une plage allant de 4 à 10 pce.

Les compositions conformes à l'invention peuvent également comprendre, outre les quatre composés décrits plus haut, des plastifiants, des pigments, des anti-oxydants, des agents anti-fatigue, des résines renforçantes ou plastifiantes, par exemple telles que décrites dans le document WO02/10269, des peroxydes et ou bismaléimides, des accepteurs (par exemple résine phénolique novolaque) ou des donneurs de méthylène (par exemple HMT ou H3M), des huiles d'extension, un ou plusieurs agents de recouvrement de la silice tels que des alcoxysilanes, des polyols, ou des amines, des promoteurs d'adhésion tel que sels organiques ou des complexes de cobalt.

L'invention concerne également un procédé de préparation d'un composant du pneumatique qui n'est pas en contact avec l'air ou avec un gaz de gonflage tel que décrit précédemment.

Il convient de noter que, selon l'invention, le composé dihydrazide peut être incorporé à tout moment dans le procédé de préparation de la composition de caoutchouc décrite plus haut, y compris lors de la fabrication du caoutchouc naturel sur son site de production à n'importe quelle étape de sa fabrication.

Selon l'invention, les composants du pneumatique sont fabriqués dans des mélangeurs appropriés, en utilisant deux phases de préparation successives selon une procédure générale bien connue de l'homme du métier, ainsi que sa mise en forme.

Le composant de caoutchouc conforme à l'invention peut ainsi être préparée selon un procédé comprenant les étapes suivantes:
(i) la réalisation d'un premier temps de travail thermomécanique (parfois qualifié de phase "non productive") des constituants de base nécessaires de la composition de caoutchouc, à l'exception du système de réticulation, par incorporation de manière intime, par malaxage thermomécaniquement, en une ou plusieurs étapes, à la matrice élastomère à base de caoutchouc naturel, de ces ingrédients de base jusqu'à atteindre la température maximale comprise entre 130°C et 200°C, de préférence comprise entre 145°C et 185°C puis
(ii) la réalisation, à une température inférieure à ladite température maximale dudit premier temps, de préférence inférieure à 120 °C, d'un second temps de travail mécanique au cours duquel est incorporé ledit système de réticulation,
(iii) l'extrusion ou le calandrage de la composition de caoutchouc ainsi obtenue, sous la forme désirée, pour fabriquer les composants du pneumatique de l'invention.

Ainsi, dans l'étape (iii) le mélange peut être calandré pour fabriquer par exemple des nappes sommet ou des nappes carcasse. Il peut également être extrudé sous une forme particulière par exemple spécifique à une couche adjacente dans le pneu à une nappe sommet ou nappe carcasse, telle que mélange de bordure de nappes sommet, mélange de renfort intérieur des carcasses...

Le composé dihydrazide répondant à la formule I décrite ci-dessus peut donc être incorporé
- soit comme additif lors de la fabrication du caoutchouc naturel sur son site de production,
- soit comme ingrédient de la composition de caoutchouc selon l'invention:
   - lors de la réalisation préalable d'un masterbatch caoutchouc naturel/dihydrazide sur outil ouvert de type outil à cylindres ou sur outil fermé de type mélangeur interne,
   - sans réalisation préalable d'un masterbatch, directement dans le mélangeur lors de la première phase non productive avec les autres composés de la composition de caoutchouc.

C'est pourquoi, selon une variante de l'invention, le procédé de préparation d'un composant du pneumatique comprend, préalablement à la réalisation de l'étape (i) précitée, les étapes de la fabrication classique du caoutchouc naturel qui comprend l'adjonction du composé dihydrazide de formule I.

Une autre variante du procédé selon l'invention comprend, préalablement à la réalisation de l'étape (i) précitée, une étape de préparation d'un masterbatch à base de caoutchouc naturel et du composé dihydrazide de formule I.

Une autre variante du procédé selon l'invention comprend l'incorporation du composé dihydrazide de formule I lors de l'étape (i).

Le promoteur d'adhésion comme par exemple des composés au cobalt, lorsqu'il est présent, peut être incorporé à différentes étapes du procédé de préparation d'un composant du pneumatique de l'invention. Selon une première variante, le promoteur d'adhésion peut être incorporé à la matrice élastomère lors de phase "non-productive" de l'étape (i). Selon une deuxième variante, le promoteur d'adhésion peut être incorporé au mélange issu de l'étape (i), lors de l'étape (ii) avec le système de vulcanisation.

L'invention a également pour objet un pneumatique dont au moins un de ses composants sans contact avec l'air ou avec un gaz de gonflage est un composant tel que décrit plus haut, et plus particulièrement un composant composite comprenant des éléments de renforts filaires métalliques, tel que la nappe carcasse ou une nappe sommet.

L'invention ainsi que ses avantages seront aisément compris à la lumière des exemples de réalisation qui suivent.

### Mesures et tests utilisés

Les compositions de caoutchouc sont caractérisées avant et après cuisson, comme indiqué ci-après, les résultats sont donnés en valeurs relatives, la valeur 100 étant celle du témoin.
a) la viscosité Mooney ML (1+4) à 100° C: mesurée selon la norme ASTM: D-1646, intitulée " Mooney " dans les tableaux, une augmentation de la valeur relative représentant une augmentation de viscosité Mooney.
(b) la dureté SHORE A: mesures effectuées selon la norme DIN 53505, une augmentation de la valeur relative représentant une augmentation de la dureté Shore.
(c) les modules d'allongement à 300 % (MA 300), à 100 % (MA 100) et à 10 % (MA 10), et le calcul de l'indice de renforcement MA300/MA100 : mesures effectuées selon la norme ISO 37 à 23 et 100°C, une augmentation de la valeur relative représentant une augmentation des modules.
(d) Les propriétés dynamiques Delta G* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10 Hz, dans les conditions normales de température (60°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan δ. Pour le cycle retour, on indique la valeur maximale de tan δ observée (tan(δ)max), ainsi que l'écart de module complexe (Delta G*) entre les valeurs à 0,1 et 50% de déformation (effet Payne). Une augmentation de la valeur relative représente une augmentation de la valeur mesurée.
(e) Le test d'adhésion : la qualité de la liaison entre le renfort métallique et la matrice de caoutchouc est appréciée par un test dans lequel on mesure la force, dite force d'arrachement, nécessaire pour extraire le renfort métallique de la matrice caoutchouc, à l'état vulcanisé. Le composite métal/caoutchouc utilisé dans ce test est un bloc de composition de caoutchouc, constitué de deux plaques de dimension 300 mm (millimètres) par 150 mm et d'épaisseur 3,5 mm, appliquées l'une sur l'autre avant la cuisson; l'épaisseur du bloc résultant est alors de 7 mm. C'est lors de la confection de ce bloc que les renforts, par exemple au nombre de douze, sont emprisonnés entre les deux plaques crues ; seule une longueur de renfort déterminée, par exemple de 12,5 mm, est laissée libre pour venir au contact de la composition de caoutchouc à laquelle cette longueur de renfort se liera pendant la cuisson ; le reste de la longueur des renforts est isolé de la composition de caoutchouc (par exemple à l'aide d'un film plastique ou métallique) pour empêcher toute adhésion en dehors de la zone de contact déterminée. Chaque renfort traverse le bloc de caoutchouc de part en part, au moins une de ses extrémités libres étant conservée de longueur suffisante (au moins 5 cm, par exemple entre 5 et 10 cm) pour permettre le tractionnement ultérieur du renfort. Le bloc comportant les douze renforts est alors placé dans un moule adapté puis cuit, sauf indication différente, pendant 40 minutes à 150°C, sous une pression d'environ 11 bars. A l'issue de la cuisson et/ou du vieillissement sévérisé ultérieur éventuel qui peut être un vieillissement thermique à 135°C pendant 16h ou un vieillissement dit « thermique et humide » à 105°C pendant 16h sous hygrométrie relative de 100%, le bloc est découpé en éprouvettes contenant chacune un renfort que l'on tractionne hors du bloc de caoutchouc à l'aide d'une machine de traction ; la vitesse de traction est de 50mm/min ; on caractérise l'adhérence par la force nécessaire pour arracher le renfort hors de l'éprouvette, à une température de 20°C ; la force d'arrachement (notée Fa) représente la moyenne des 12 mesures correspondant aux 12 éprouvettes issues du bloc initial. Une augmentation de la valeur relative représente une augmentation de la force d'arrachement mesurée.

### Exemple 1

### Compositions conformes ou non à l'invention, comprenant un ou plusieurs élastomères Incorporation de la molécule :

Plusieurs molécules de type hydrazide ont été utilisées comme additif du caoutchouc naturel :
   - la dihydrazide téréphtalique,
   - la dihydrazide adipique,
   - la dihydrazide dodécanoïque.
   - la dihydrazide isophtalique
   - la monohydrazide propionique
   - la monohydrazide benzhydrazide

Les molécules sont représentées sur les figures ci-après.

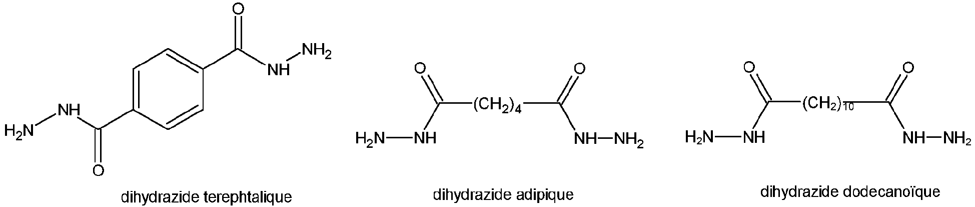

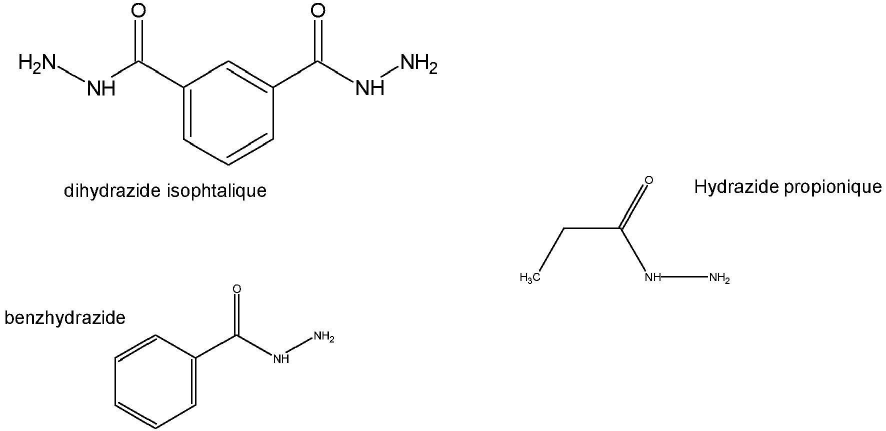

Le mode d'incorporation de la molécule est le suivant :
Sur un outil à cylindres dont les rouleaux ont un diamètre égal à 150 mm, un entre-fer égal à 2 mm et une vitesse de rotation des rouleaux de 20 tours.min⁻¹, le caoutchouc naturel subit les étapes suivantes :
   1) 3 passes du caoutchouc naturel initialement à température ambiante ;
   2) ajout d'une quantité donnée de dihydrazide sous forme de poudre ;
   3) réalisation de 12 passes de manière à disperser la poudre et à homogénéiser l'échantillon.

Deux différents types de caoutchouc naturel ont été testés pour constituer les masterbatches, un NR référencé TSR20 et un NR référencé TSR3L.

Le détail est présenté dans le tableau ci-dessous :

**Tableau 1:**

| **Réf.** | **Type** | **Dihydrazide** | **Quantité en pce** | **Etape 1** | **Etape 2** | **Etape 3** |
|---|---|---|---|---|---|---|
| A | TSR20 | | | | | |
| B | TSR20 | | | X | | X |
| G | TSR20 | Terepthalique | 1 | X | X | X |
| H | TSR20 | Adipique | 1 | X | X | X |
| I | TSR20 | Dodécanoïque | 1 | X | X | X |
| J | TSR20 | Isophtalique | 1 | X | X | X |
| K | TSR3L | | | | | |
| M | TSR3L | Terephtalique | 1 | X | X | X |
| N | TSR3L | Adipique | 1 | X | X | X |
| Q | TSR20 | Propionique | 1 | X | X | X |
| R | TSR20 | Benzhydrazide | 1 | X | X | X |

| | | | | | | |
|---|---|---|---|---|---|---|
| Les molécules propionique, et benzhydrazide sont des contre-exemples (monohydrazides aliphatiques, benziques). | | | | | | |

Dans cet exemple, les élastomères ont été utilisés pour la préparation de compositions de caoutchouc comprenant chacune du noir de carbone à titre de charge renforçante.

Chacune de ces compositions présente la formulation suivante (exprimée en pce : parties pour cent parties d'élastomère) :

**Tableau 1a:**

| | Composition A, B, Q, R, M, N et G à K | Composition S | Compositions T et U |
|---|---|---|---|
| Elastomère diénique (1) | 100 | 100 | 80 |
| Elastomère diénique (2) | | | 20 |
| Charge (3) | 55 | 55 | 55 |
| Composé de cobalt (4) | 1.5 | 1.5 | 1.5 |
| Anti-oxydant (5) | 1.5 | 1.5 | 1.5 |
| Acide stéarique | 0.6 | 0.6 | 0.6 |
| ZnO | 8 | 8 | 8 |
| Accepteur de méthylène (6) | | 1 | |
| Donneur de méthylène (7) | | 0.5 | |
| Sulfénamide (8) | 0.7 | 0.7 | 0.7 |
| Soufre actif | 4.5 | 4.5 | 4.5 |

| | | | |
|---|---|---|---|
| *(1) = Caoutchouc naturel TSR20 ou TSR3L* *(2) = SSBR avec 26% de styrène et 24% de motifs polybutadiène 1,2* *(3) = noir N330* *(4) = naphténate de cobalt* *(5) = N-(1,3-diméthylbutyl)-N'-phényl-p-phénylènediamine,* *(6) = Résorcinol (Société Sumitomo)* *(7) = HMT (hexaméthylènetétraamine - Société Degussa)* *(8) = TBBS* | | | |

L'élastomère diénique (1) entrant dans les compositions S et T est l'élastomère A. L'élastomère diénique (1) entrant dans la composition U est l'élastomère G.

Chacune des compositions est réalisée dans un premier temps, par travail thermomécanique, puis, dans un second temps de finition, par un travail mécanique.

On introduit successivement, dans un mélangeur interne type 'Banbury' dont la capacité est de 3300cm³, à raison d'un coefficient de remplissage de 70%, avec une température initiale d'environ 50°C, l'élastomère, le noir de carbone, l'anti-oxydant, le composé de cobalt, l'acide stéarique, l'oxyde de zinc, et l'accepteur de méthylène spécifique à la composition S. Cette étape de travail thermomécanique est conduite pendant 3 à 5 minutes, jusqu'à une température de tombée de l'ordre de 170°C environ, avec une vitesse moyenne des palettes de 60 tours/min.

On récupère le mélange ainsi obtenu, on le refroidit puis, dans un mélangeur externe (homo-finisseur), on ajoute le soufre, la sulfénamide à 23°C, et le donneur de méthylène spécifique à la composition S, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

Les compositions ainsi obtenues peuvent également servir à réaliser un composite métal/caoutchouc pour préparation d'éprouvettes d'adhésion comme décrites dans le chapitre mesures et tests.

La réticulation est effectuée à 150°C pendant 40 min.

Les résultats sont consignés dans le tableau 1b ci-après :

**Tableau 1b:**

| Compositions | A | B | G | H | I | J | Q | R | S |
|---|---|---|---|---|---|---|---|---|---|
| **Propriétés à l'état non réticulé** | | | | | | | | | |
| ML 1+4 à 100°C ("Mooney mélange") | 100 | 95 | 108 | 133 | 126 | 114 | 91 | 103 | 101 |

| **Propriétés à l'état réticulé** | | | | | | | | | |
|---|---|---|---|---|---|---|---|---|---|
| Shore A | 100 | 102 | 101 | 100 | 102 | 102 | 111 | 105 | 108 |
| MA300/MA100 à 23°C | 100 | 100 | 100 | 102 | 100 | 98 | 83 | 89 | 95 |

| **Propriétés dynamiques en fonction de la déformation** | | | | | | | | | |
|---|---|---|---|---|---|---|---|---|---|
| Delta G* à 60°C | 100 | 104 | 82 | 68 | 76 | 92 | 187 | 107 | 128 |
| Tan (δ) max à 60°C | 100 | 102 | 80 | 72 | 70 | 82 | 112 | 93 | 96 |

| **Test d'adhésion** | | | | | | | | | |
|---|---|---|---|---|---|---|---|---|---|
| Force d'arrachement (unités relatives) Fa à l'état initial | 100 | 103 | 101 | 111 | 103 | 105 | 35 | 99 | 115 |

Les compositions G, H, I et J, conformes à l'invention ont une dureté Shore et un indice de renforcement MA300/MA100 à 23°C équivalents à ceux de la composition témoin A. Par ailleurs, le pouvoir collant des compositions G, H, I et J conformes à l'invention, est maintenu, voire amélioré par rapport à celui de la composition témoin A. Ces propriétés de maintien de rigidité, cohésion et adhésion des compositions G, H, I et J, conformes à l'invention, sont obtenues avec également une nette diminution des valeurs Delta G* à 60°C et tan(δ)ₘₐₓ à 60°C par rapport à celles de la composition témoin A.

Le compromis rigidité-cohésion-adhésion-hystérèse des compositions à base des élastomères conformes à l'invention est amélioré du fait d'une hystérèse nettement réduite, pour des niveaux de rigidité, cohésion et adhésion maintenus par rapport à la composition de référence.

Les compositions Q et R, non conformes à l'invention, montrent une rigidité Shore plus élevée que la composition de référence A et un indice de renforcement MA300/MA100 inférieur à celui de la composition de référence A et/ou des valeurs Delta G* à 60°C et/ou tan(δ)ₘₐₓ à 60°C plus élevées que celles de la composition de référence A et/ou un pouvoir d'adhésion au renfort dégradé par rapport à celui de la composition de référence. Dans l'ensemble, les compositions Q et R contenant une hydrazide propionique, ou une benzhydrazide ne permettent pas d'améliorer le compromis rigidité-cohésion-adhésion-hystérèse par rapport à l'élastomère A de référence.

La composition S comprenant un système donneur/accepteur de méthylène est connue de l'homme du métier comme étant une référence pour les propriétés adhésives des compositions avec les renforts. Il convient alors de noter que les bonnes propriétés adhésives de la composition S sont obtenues avec une augmentation de la Shore, une diminution du MA300/MA100 et peu d'impact sur l'hystérèse. Cette composition S de référence apporte alors un moins bon compromis rigidité-cohésion-adhésion-hystérèse que par exemple la composition H de l'invention à base d'élastomère modifié dihydrazide isophtalique, pré-citée dans le texte.

**Tableau 1c:**

| Compositions | T | U |
|---|---|---|
| **Propriétés à l'état non réticulé** | | |
| ML 1+4 à 100°C ("Mooney mélange") | 100 | 109 |

| **Propriétés à l'état réticulé** | | |
|---|---|---|
| Shore A | 100 | 99 |
| MA300/MA100 | 100 | 101 |

| **Propriétés dynamiques en fonction de la déformation** | | |
|---|---|---|
| Delta G* à 60°C | 100 | 79 |
| Tan (δ) max à 60°C | 100 | 78 |

| **Test d'adhésion** | | |
|---|---|---|
| Force d'arrachement (unités relatives) Fa après vieillissement thermique et humide | 100 | 98 |

La composition U conforme à l'invention a une dureté Shore et un indice de renforcement MA300/MA100 à 23°C équivalent à celui de la composition témoin T. Par ailleurs, le pouvoir collant, même après un vieillissement sévérisé (thermique et humide) de la composition U conforme à l'invention n'est pas dégradé par rapport à celui de la composition témoin T. Ces propriétés de maintien de rigidité, cohésion et adhésion de la composition U conforme à l'invention, est obtenu avec également une nette diminution des valeurs Delta G* à 60°C et tan(8)ₘₐₓ à 60°C par rapport à celles de la composition témoin T.

Le compromis rigidité-cohésion-adhésion-hystérèse des compositions à base des élastomères conformes à l'invention est amélioré du fait d'une hystérèse nettement réduite, pour des niveaux de rigidité, cohésion et adhésion maintenus par rapport à la composition de référence.

**Tableau 1 d:**

| Compositions | K | M | N |
|---|---|---|---|
| **Propriétés à l'état non réticulé** | | | |
| ML 1+4 à 100°C ("Mooney mélange") | 100 | 110 | 121 |

| **Propriétés à l'état réticulé** | | | |
|---|---|---|---|
| Shore A | 100 | 99 | 101 |
| MA300/MA100 à 23°C | 100 | 100 | 102 |

| **Propriétés dynamiques en fonction de la déformation** | | | |
|---|---|---|---|
| Delta G* à 60°C | 100 | 62 | 65 |
| Tan (δ) max à 60°C | 100 | 74 | 67 |

| **Test d'adhésion** | | | |
|---|---|---|---|
| Force d'arrachement (unités relatives) Fa après vieillissement thermique | 100 | 125 | 132 |

Les compositions M et N conformes à l'invention ont une dureté Shore et un indice de renforcement MA300/MA100 à 23°C équivalents à ceux de la composition témoin K. Par ailleurs, le pouvoir collant des compositions M et N conformes à l'invention, est nettement amélioré, même après vieillissement sévérisé (thermique), par rapport à celui de la composition témoin K. Ces propriétés de maintien de rigidité et de cohésion, avec amélioration de l'adhésion à l'état vieilli des compositions M et N, conformes à l'invention, sont obtenues avec également une nette diminution des valeurs Delta G* à 60°C et tan(δ)ₘₐₓ à 60°C par rapport à celles de la composition témoin K. Le compromis rigidité-cohésion-adhésion-hystérèse des compositions à base des élastomères conformes à l'invention est amélioré du fait d'une hystérèse nettement réduite, pour des niveaux de rigidité, cohésion et adhésion maintenus, voire améliorés par rapport à la composition de référence.

### Exemple 2 :

### EFFET TAUX DE SOUFRE

Dans cet exemple, la molécule conforme à l'invention est de nature dihydrazide téréphtalique et est introduite à 1pce conformément aux étapes 1, 2 et 3 décrites dans l'Exemple 1, dans les compositions G, AF et AG.

**Tableau 2a:**

| Compositions | A & G | AD & AF | AE & AG |
|---|---|---|---|
| Elastomère diénique (1) | 100 | 100 | 100 |
| Charge (2) | 55 | 55 | 55 |
| Composé de cobalt (3) | 1.5 | 1.5 | 1.5 |
| Anti-oxydant (4) | 1.5 | 1.5 | 1.5 |
| Acide stéarique | 0.6 | 0.6 | 0.6 |
| ZnO | 8 | 8 | 8 |
| Sulfénamide (5) | 0.7 | 0.7 | 0.7 |
| Soufre | 4.5 | 2.5 | 7.5 |

| | | | |
|---|---|---|---|
| *(1) = caoutchouc naturel TSR20* *(2) = noir N330* *(3) = naphténate de cobalt* *(4) = N-(1,3-diméthylbutyl)-N'-phényl-p-phénylènediamine* *(5) = TBBS* | | | |

Chacune des compositions est réalisée dans un premier temps, par travail thermomécanique, puis, dans un second temps de finition, par un travail mécanique.

On introduit successivement, dans un mélangeur interne type 'Banbury' dont la capacité est de 3300cm³, à raison d'un coefficient de remplissage de 70%, avec une température initiale d'environ 50°C, l'élastomère, le noir de carbone, l'anti-oxydant, le composé de cobalt, l'acide stéarique et l'oxyde de zinc. Cette étape de travail thermomécanique est conduite pendant 3 à 5 minutes, jusqu'à une température maximale de tombée de l'ordre de 170°C environ, avec une vitesse moyenne des palettes de 60 tours/min.

On récupère le mélange ainsi obtenu, on le refroidit puis, dans un mélangeur externe (homo-finisseur), on ajoute le soufre et la sulfénamide à 23°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

Les compositions ainsi obtenues peuvent également servir à réaliser un composite métal/caoutchouc pour préparation d'éprouvettes d'adhésion comme décrites dans le chapitre mesures et tests.

La réticulation est effectuée à 150°C pendant 40 min.

Les résultats sont consignés dans le tableau 2b ci-après :

**Tableau 2b:**

| Compositions | A | AD | AE | G | AF | AG |
|---|---|---|---|---|---|---|
| **Propriétés à l'état non réticulé** | | | | | | |
| ML 1+4 à 100°C ("Mooney mélange") | 100 | 111 | 107 | 108 | 120 | 117 |

| **Propriétés à l'état réticulé** | | | | | | |
|---|---|---|---|---|---|---|
| Shore A | 100 | 97 | 104 | 101 | 96 | 105 |
| MA300/MA100 à 23°C | 100 | 115 | 95 | 100 | 111 | 97 |

| **Propriétés dynamiques en fonction de la déformation** | | | | | | |
|---|---|---|---|---|---|---|
| Delta G* à 60°C | 100 | 89 | 110 | 82 | 74 | 79 |
| Tan (δ) max à 60°C | 100 | 104 | 100 | 80 | 89 | 75 |

Les matériaux de référence A, AD et AE présentent des évolutions de rigidité Shore et d'indice de renforcement MA300/MA100 en fonction du taux de soufre, conformes à ce qui est connu de l'homme de l'art. Ces compromis rigidité/renforcement s'accompagnent de propriétés hystérétiques maintenues ou augmentées. Les compositions G, AF et AG, conformes à l'invention, préservent les mêmes tendances d'évolutions de Shore et d'indice de renforcement avec le taux de soufre. Néanmoins, ces dernières apportent une amélioration des propriétés hystérétiques. Le compromis rigidité-cohésion-hystérèse des compositions G, AF et AG à base des élastomères conformes à l'invention est amélioré du fait d'une hystérèse nettement réduite, avec des paramètres rigidité et cohésion en fonction du taux de soufre inchangés.

### Exemple 3 :

### EFFET PRESENCE DE SEL DE COBALT

Dans cet exemple, la molécule conforme à l'invention est de nature dihydrazide téréphtalique et est introduite à 1pce conformément aux étapes 1, 2 et 3 décrites dans l'Exemple 1, dans les compositions G, AM et AO.

Les quantités ajoutées des différents sels de cobalt sont identiques en terme de nombre de moles de cobalt.

**Tableau 3a:**

| Compositions | A&G | AL&AM | AN & AO |
|---|---|---|---|
| Elastomère diénique (1) | 100 | 100 | 100 |
| Charge (2) | 55 | 55 | 55 |
| Composé de cobalt (3) | 1.5 | | |
| Composé de cobalt (4) | | 1.9 | |
| Anti-oxydant (5) | 1.5 | 1.9 | 1.5 |
| Acide stéarique | 0.6 | 1.5 | 0.6 |
| ZnO | 8 | 0.6 | 8 |
| Sulfénamide (6) | 0.7 | 8 | 0.7 |
| Soufre | 4.5 | 0.7 | 4.5 |
| | | 4.5 | |

| | | | |
|---|---|---|---|
| *(1) = Caoutchouc naturel TSR20* *(2) = noir N330* *(3) = naphténate de cobalt* *(4) = stéarate de cobalt* *(5) = N-(1,3-diméthylbutyl)-N'-phényl-p-phénylènediamine,* (6) = *TBBS* | | | |

Chacune des compositions est réalisée dans un premier temps, par travail thermomécanique, puis, dans un second temps de finition, par un travail mécanique.

On introduit successivement, dans un mélangeur interne type 'Banbury' dont la capacité est de 3300cm³, à raison d'un coefficient de remplissage de 70%, avec une température initiale d'environ 50°C, l'élastomère, le noir de carbone, l'anti-oxydant, le composé de cobalt, l'acide stéarique et l'oxyde de zinc. Cette étape de travail thermomécanique est conduite pendant 3 à 5 minutes, jusqu'à une température maximale de tombée de l'ordre de 170°C environ, avec une vitesse moyenne des palettes de 60 tours/min.

On récupère le mélange ainsi obtenu, on le refroidit puis, dans un mélangeur externe (homo-finisseur), on ajoute le soufre et la sulfénamide à 23°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

Les compositions ainsi obtenues peuvent également servir à réaliser un composite métal/caoutchouc pour préparation d'éprouvettes d'adhésion comme décrites dans le chapitre mesures et tests.

La réticulation est effectuée à 150°C pendant 40 min.

Les résultats sont consignés dans le tableau 3b ci-après :

**Tableau 3b**

| Compositions | A | G | AL | AM | AN | AO |
|---|---|---|---|---|---|---|
| **Propriétés à l'état non réticulé** | | | | | | |
| ML 1+4 à 100°C ("Mooney mélange") | 100 | 108 | 100 | 115 | 100 | 107 |

| Propriétés **à l'état réticulé** | | | | | | |
|---|---|---|---|---|---|---|
| Shore A | 100 | 101 | 100 | 98 | 100 | 99 |
| MA300/MA100 à 23°C | 100 | 100 | 100 | 105 | 100 | 103 |

| **Propriétés dynamiques en fonction de la déformation** | | | | | | |
|---|---|---|---|---|---|---|
| Delta G* à 60°C | 100 | 82 | 100 | 74 | 100 | 85 |
| Tan (δ) max à 60°C | 100 | 80 | 100 | 79 | 100 | 89 |
| **Test d'adhésion** | | | | | | |
| Force d'arrachement (unités relatives) Fa après vieillissement thermique et humide | 100 | 95 | 100 | 103 | 100 | 95 |

Les compositions G, AM et AO conformes à l'invention ont une dureté Shore et un indice de renforcement MA300/MA100 à 23°C équivalents à ceux des compositions témoin respectives A, AL et AN. Ce maintien des propriétés de rigidité et de cohésion, pour les compositions conformes à l'invention, sont obtenues avec une diminution des valeurs Delta G* à 60°C et tan(δ)max à 60°C par rapport à celles des compositions témoin respectives A, AL et AN. Par ailleurs, le pouvoir collant, même après un vieillissement sévérisé (thermique et humide) des compositions G, AM et AO conformes à l'invention n'est pas dégradé par rapport à celui des compositions témoin respectives A, AL et AN.

Le compromis rigidité-cohésion-hystérèse-adhésion des compositions à base des élastomères conformes à l'invention est amélioré du fait d'une hystérèse nettement réduite, pour des niveaux de rigidité, cohésion et adhésion maintenus. En outre, on peut déduire de ces résultats que ce compromis rigidité-cohésion-hystérèse-adhésion est amélioré par l'invention que le promoteur d'adhésion soit présent ou pas, et indépendamment de la nature de ce promoteur d'adhésion.

### Exemple 4 :

### EFFET SILICE MINORITAIRE

Dans cet exemple, la molécule conforme à l'invention est de nature dihydrazide téréphtalique et est introduite à 1pce, conformément aux étapes 1, 2 et 3 décrites dans l'Exemple 1 de ce document, dans les compositions G, AR et AS.

**Tableau 4a:**

| Compositions | A&G | AP & AR | AQ & AS |
|---|---|---|---|
| Elastomère diénique (1) | 100 | 100 | 100 |
| Charge 1 (2) | 55 | 40 | 30 |
| Charge 2 (3) | | 15 | 26 |
| Silane (4) | | 1.2 | 2.1 |
| Composé de cobalt (5) | 1.5 | 1.5 | 1.5 |
| Anti-oxydant (6) | 1.5 | 1.5 | 1.5 |
| Acide stéarique | 0.6 | 0.6 | 0.6 |
| ZnO | 8 | 8 | 8 |
| Sulfénamide (7) | 0.7 | 0.7 | 0.7 |
| Soufre | 4.5 | 4.5 | 4.5 |

| | | | |
|---|---|---|---|
| *(1) = Caoutchouc naturel TSR20* *(2) = noir N330* *(3) = Zeosil 160MP de Rhodia* *(4) = Si69 de Degussa* *(5) = naphténate de cobalt* *(6) = N-(1,3-diméthylbutyl)-N'-phényl-p-phénylènediamine,* *(7) = TBBS* | | | |

Chacune des compositions est réalisée dans un premier temps, par travail thermomécanique, puis, dans un second temps de finition, par un travail mécanique.

On introduit successivement, dans un mélangeur interne type 'Banbury' dont la capacité est de 3300cm³, à raison d'un coefficient de remplissage de 70%, avec une température initiale d'environ 50°C, l'élastomère, le noir de carbone, la silice, l'anti-oxydant, le composé de cobalt, l'acide stéarique, le silane et l'oxyde de zinc. Cette étape de travail thermomécanique est conduite pendant 3 à 5 minutes, jusqu'à une température maximale de tombée de l'ordre de 170°C environ, avec une vitesse moyenne des palettes de 60 tours/min.

On récupère le mélange ainsi obtenu, on le refroidit puis, dans un mélangeur externe (homo-finisseur), on ajoute le soufre et la sulfénamide à 23°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

Les compositions ainsi obtenues peuvent également servir à réaliser un composite métal/caoutchouc pour préparation d'éprouvettes d'adhésion comme décrites dans le chapitre mesures et tests.

La réticulation est effectuée à 150°C pendant 40 min.

Les résultats sont consignés dans le tableau 4b ci-après :

**Tableau 4b:**

| Compositions | A | G | AP | AR | AQ | AS |
|---|---|---|---|---|---|---|
| **Propriétés à l'état non réticulé** | | | | | | |
| ML 1+4 à 100°C ("Mooney mélange") | 100 | 108 | 100 | 132 | 100 | 143 |
| **Propriétés à l'état réticulé** | | | | | | |
| Shore A | 100 | 101 | 100 | 101 | 100 | 100 |
| MA300/MA100 à 23°C | 100 | 100 | 100 | 101 | 100 | 107 |
| **Propriétés dynamiques en fonction de la déformation** | | | | | | |
| Delta G* à 60°C | 100 | 82 | 100 | 100 | 100 | 85 |
| Tan (δ) max à 60°C | 100 | 80 | 100 | 87 | 100 | 85 |
| **Test d'adhésion** | | | | | | |
| Force d'arrachement (unités relatives) Fa à l'état initial | 100 | 101 | 100 | 104 | 100 | 98 |
| Force d'arrachement (unités relatives) Fa après vieillissement thermique | 100 | 108 | 100 | 140 | nd* | nd* |

| | | | | | | |
|---|---|---|---|---|---|---|
| * non déterminé | | | | | | |

Les compositions G, AR et AS conformes à l'invention ont une dureté Shore et un indice de renforcement MA300/MA100 à 23°C équivalents ou améliorés par rapport à ceux des compositions témoin respectives A, AP et AQ. Ces propriétés de maintien de rigidité et de cohésion, conformes à l'invention, sont obtenues avec une diminution des valeurs de tan(δ)max à 60°C par rapport à celles des compositions témoin respectives A, AP et AQ.

Le compromis rigidité-cohésion-hystérèse-adhésion des compositions G, AR et AS, à base d'élastomères conformes à l'invention, est amélioré du fait d'une hystérèse nettement réduite, pour des niveaux de rigidité, cohésion et adhésion maintenus. En conditions de tests sévérisés, l'adhésion est également maintenue, voire améliorée.

### Exemple 5:

### EFFET MODE D'INTRODUCTION

Dans cet exemple, pour la composition G, la molécule conforme à l'invention est de nature dihydrazide téréphtalique et est introduite à 1pce conformément aux étapes 1, 2 et 3 décrites dans l'Exemple 1 de ce document.

Pour la composition AT, la molécule conforme à l'invention est de nature dihydrazide téréphtalique et est introduite à 1pce dans le mélangeur interne pendant l'étape de travail thermomécanique.

**Tableau 5a:**

| Compositions | A | G et AT |
|---|---|---|
| Elastomère diénique (1) | 100 | 100 |
| Composé hydrazide (2) | | 1 |
| Charge (3) | 55 | 55 |
| Composé de cobalt (4) | 1.5 | 1.5 |
| Anti-oxydant (5) | 1.5 | 1.5 |
| Acide stéarique | 0.6 | 0.6 |
| ZnO | 8 | 8 |
| Sulfénamide (6) | 0.7 | 0.7 |
| Soufre | 4.5 | 4.5 |

| | | |
|---|---|---|
| *(1) = Caoutchouc naturel TSR20* *(2) = dihydrazide téréphtalique* *(3) = noir N330* *(4) = naphténate de cobalt* *(5) = N-(1,3-diméthylbutyl)-N'-phényl-p-phénylènediamine,* *(6) = TBBS* | | |

Chacune des compositions est réalisée dans un premier temps, par travail thermomécanique, puis, dans un second temps de finition, par un travail mécanique.

On introduit successivement, dans un mélangeur interne type 'Banbury' dont la capacité est de 3300cm³, à raison d'un coefficient de remplissage de 70%, avec une température initiale d'environ 50°C, l'élastomère, le noir de carbone, l'anti-oxydant, le composé de cobalt, l'acide stéarique, l'oxyde de zinc, et le composé hydrazide spécifique à la composition AT. Cette étape de travail thermomécanique est conduite pendant 3 à 5 minutes, jusqu'à une température maximale de tombée de l'ordre de 170°C environ, avec une vitesse moyenne des palettes de 60 tours/min.

On récupère le mélange ainsi obtenu, on le refroidit puis, dans un mélangeur externe (homo-finisseur), on ajoute le soufre et la sulfénamide à 23°C, en mélangeant encore le tout pendant une durée de 3 à 4 minutes (second temps précité de travail mécanique).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques.

Les compositions ainsi obtenues peuvent également être extrudées sous la forme de profilés directement utilisables, après découpage et/ou assemblage aux dimensions souhaitées, par exemple comme produits semi-finis pour pneumatiques.

Les compositions ainsi obtenues peuvent également servir à réaliser un composite métal/caoutchouc pour préparation d'éprouvettes d'adhésion comme décrites dans le chapitre mesures et tests.

La réticulation est effectuée à 150°C pendant 40 min.

Les résultats sont consignés dans le tableau 5b ci-après :

**Tableau 5b:**

| Compositions | A | G | AT |
|---|---|---|---|
| **Propriétés à l'état non réticulé** | | | |
| ML 1+4 à 100°C ("Mooney mélange") | 100 | 108 | 120 |

| **Propriétés à l'état réticulé** | | | |
|---|---|---|---|
| Shore A | 100 | 101 | 100 |
| MA300/MA100 à 23°C | 100 | 100 | 102 |

| **Propriétés dynamiques en fonction de la déformation** | | | |
|---|---|---|---|
| Delta G* à 60°C | 100 | 82 | 72 |
| Tan (δ) max à 60°C | **100** | **80** | **75** |

| **Test d'adhésion** | | | |
|---|---|---|---|
| Force d'arrachement (unités relatives) Fa à l'état initial | **100** | **101** | **98** |
| Force d'arrachement (unités relatives) Fa après vieillissement thermique | **100** | **108** | **113** |

| | | | |
|---|---|---|---|
| Les compositions G et AT conformes à l'invention ont une dureté Shore et un indice de renforcement MA300/MA100 à 23°C équivalents à ceux de la composition témoin A. Par ailleurs, le pouvoir collant des compositions G et AT conformes à l'invention, est maintenu, voire amélioré par rapport à celui de la composition témoin A. Ces propriétés de maintien de rigidité, cohésion et adhésion des compositions G et AT, conformes à l'invention, sont obtenues avec également une nette diminution des valeurs Delta G* à 60°C et tan(δ)max à 60°C par rapport à celles de la composition témoin A. | | | |

Le compromis rigidité-cohésion-adhésion-hystérèse des compositions à base des élastomères conformes à l'invention est amélioré du fait d'une hystérèse nettement réduite, pour des niveaux de rigidité, cohésion et adhésion maintenus par rapport à la composition de référence.

## Revendications

1. Composant du pneumatique qui n'est pas en contact avec l'air ou avec un gaz de gonflage, **caractérisé en ce qu**'il comprend une composition de caoutchouc comprenant (a) une matrice élastomérique à base de caoutchouc naturel, (b) une charge renforçante, (c) de plus de 2,5 à 8,5 pce de soufre et (d) un composé dihydrazide répondant à la formule suivante: 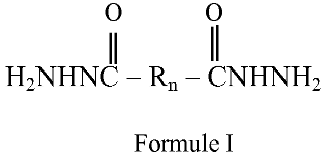 dans laquelle R est un radical hydrocarboné bivalent choisi parmi les radicaux aromatiques substitués ou non, ayant 6 à 20 atomes de carbone, les radicaux aliphatiques, saturés ou insaturés, linéaires ou ramifiés, ayant 2 à 20 atomes de carbone, et n vaut 0 ou 1, laquelle composition ne comprend pas de copolymère d'isobutylène-paraméthylstyrène-parabromométhylstyrène.

2. Composant du pneumatique selon la revendication 1, **caractérisé en ce qu**'il comprend un élément de renfort filaire.

3. Composant du pneumatique selon la revendication 2, **caractérisé en ce que** l'élément de renfort filaire est en acier.

4. Composant du pneumatique selon l'une quelconque des revendications 1 à 3, **caractérisé en ce que** la composition comprend un promoteur d'adhésion.

5. Composant du pneumatique selon la revendication 1, **caractérisé en ce que** ledit composant est une couche adjacente à un composite renfort / caoutchouc.

6. Composant du pneumatique selon l'une quelconque des revendications 1 à 5, **caractérisé en ce que** le composé dihydrazide est choisi parmi dihydrazide phtalique, dihydrazide isophtalique, dihydrazide téréphtalique, dihydrazide succinique, dihydrazide adipique, dihydrazide azelaïque, dihydrazide sébacique, dihydrazide oxalique, dihydrazide dodécanoïque.

7. Composant du pneumatique selon l'une quelconque des revendications 1 à 6, **caractérisé en ce que** le caoutchouc naturel est présent dans la matrice élastomérique selon une fraction massique majoritaire.

8. Composant du pneumatique selon l'une quelconque des revendications 1 à 7, **caractérisé en ce que** la charge renforçante comprend plus de 50% en poids du poids total de la charge, d'une charge organique renforçante.

9. Composant du pneumatique selon l'une quelconque des revendications 1 à 8, **caractérisé en ce que** le soufre est présent dans la composition selon une proportion allant de 3,5 à 7 pce.

10. Procédé de préparation d'un composant du pneumatique tel que décrit dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation, par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 120 °C, d'un second temps de travail mécanique au cours duquel est incorporé ledit système de réticulation,
(iii) l'extrusion ou le calandrage de la composition de caoutchouc ainsi obtenue, sous la forme désirée, pour fabriquer le composant du pneumatique,
**caractérisé en ce que,** préalablement à la réalisation de l'étape (i) précitée, le procédé comprend les étapes de la fabrication du caoutchouc naturel comprenant une étape d'adjonction du composé dihydrazide de formule I.

11. Procédé de préparation d'un composant du pneumatique tel que décrit dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation, par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 120 °C, d'un second temps de travail mécanique au cours duquel est incorporé ledit système de réticulation,
(iii) l'extrusion ou le calandrage de la composition de caoutchouc ainsi obtenue, sous la forme désirée, pour fabriquer le composant du pneumatique,
**caractérisé en ce que,** préalablement à la réalisation de l'étape (i) précitée, le procédé comprend une étape de préparation d'un masterbatch à base du caoutchouc naturel et du composé dihydrazide de formule I.

12. Procédé de préparation d'un composant du pneumatique tel que décrit dans l'une quelconque des revendications 1 à 9, comprenant les étapes suivantes:
(i) la réalisation, à une température maximale comprise entre 130 °C et 200 °C, d'un premier temps de travail thermomécanique des constituants de base nécessaires de la composition de caoutchouc, à l'exception du système de réticulation, par incorporation de manière intime, par malaxage, à la matrice élastomérique à base de caoutchouc naturel, d'ingrédients de la composition, puis
(ii) la réalisation, à une température inférieure à ladite température maximale dudit premier temps, de préférence inférieure à 120 °C, d'un second temps de travail mécanique au cours duquel est incorporé ledit système de réticulation,
(iii) l'extrusion ou le calandrage de la composition de caoutchouc ainsi obtenue, sous la forme désirée, pour fabriquer le composant du pneumatique,
**caractérisé en ce que** le composé dihydrazide de formule I est ajouté au mélange lors de l'étape (i).

13. Procédé selon l'une quelconque des revendications 10 à 12, **caractérisé en ce qu'**un promoteur d'adhésion est incorporé à la matrice élastomérique lors de l'étape (i).

14. Procédé selon l'une quelconque des revendications 10 à 12, **caractérisé en ce qu'**un promoteur d'adhésion est incorporé au mélange issu de l'étape (i), lors de l'étape (ii).

15. Pneumatique, **caractérisé en ce qu**'au moins un de ses composants sans contact avec l'air ou avec un gaz de gonflage est un composant tel que décrit dans l'une quelconque des revendications 1 à 9.

## Patentansprüche

1. Luftreifenbestandteil, der nicht mit der Luft oder einem Füllgas in Kontakt ist, **dadurch gekennzeichnet, dass** er eine Kautschukzusammensetzung umfasst, die (a) eine Elastomermatrix auf Grundlage von Naturkautschuk, (b) einen verstärkenden Füllstoff, (c) mehr als 2,5 bis 8,5 phr an Schwefel und (d) eine Dihydrazidverbindung nach der folgenden Formel umfasst: 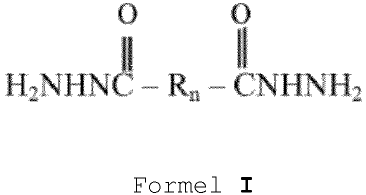 in welcher **R** ein zweibindiger Kohlenwasserstoffrest ist, der aus den substituierten oder unsubstituierten aromatischen Resten mit 6 bis 20 Kohlenstoffatomen, den gesättigten oder ungesättigten aliphatischen Resten geradkettiger oder verzweigter Beschaffenheit mit 2 bis 20 Kohlenstoffatomen ausgewählt ist, und n gleich 0 oder 1 ist, wobei die Zusammensetzung keinerlei Isobutylen/Paramethylstyrol/Parabrommethylstyrol-Copolymer umfasst.

2. Luftreifenbestandteil nach Anspruch 1, **dadurch gekennzeichnet, dass** er ein fadenartiges Verstärkungselement umfasst.

3. Luftreifenbestandteil nach Anspruch 2, **dadurch gekennzeichnet, dass** das fadenartige Verstärkungselement aus Stahl ist.

4. Luftreifenbestandteil nach einem beliebigen der Ansprüche 1 bis 3, **dadurch gekennzeichnet, dass** die Zusammensetzung einen Haftvermittler umfasst.

5. Luftreifenbestandteil nach Anspruch 1, **dadurch gekennzeichnet, dass** es sich bei dem Bestandteil um eine Schicht handelt, die an ein Verstärkungsmittel/Kautschuk-Verbundelement angrenzt.

6. Luftreifenbestandteil nach einem beliebigen der Ansprüche 1 bis 5, **dadurch gekennzeichnet, dass** die Dihydrazidverbindung aus Phthalsäuredihydrazid, Isophthalsäuredihydrazid, Terephthalsäuredihydrazid, Bernsteinsäuredihydrazid, Adipinsäuredihydrazid, Azelainsäuredihydrazid, Sebacinsäuredihydrazid, Oxalsäuredihydrazid, Dodecansäuredihydrazid ausgewählt ist.

7. Luftreifenbestandteil nach einem beliebigen der Ansprüche 1 bis 6, **dadurch gekennzeichnet, dass** der Naturkautschuk in der Elastomermatrix den überwiegenden Massenanteil ausmacht.

8. Luftreifenbestandteil nach einem beliebigen der Ansprüche 1 bis 7, **dadurch gekennzeichnet, dass** der verstärkende Füllstoff mehr als 50 Gewichts-%, bezogen auf das Gesamtgewicht des Füllstoffs, eines verstärkenden organischen Füllstoffs umfasst.

9. Luftreifenbestandteil nach einem beliebigen der Ansprüche 1 bis 8, **dadurch gekennzeichnet, dass** der Schwefel in der Zusammensetzung derart vorliegt, dass sein Anteil im Bereich von 3,5 bis 7 phr liegt.

10. Verfahren zur Herstellung eines Luftreifenbestandteils gemäß der Beschreibung in einem beliebigen der Ansprüche 1 bis 9, wobei es die folgenden Schritte umfasst:
(i) Durchführen, bei einer Höchsttemperatur im Bereich von 130 °C bis 200 °C, eines ersten thermomechanischen Verarbeitungsvorgangs der grundlegenden Inhaltsstoffe, die für die Kautschukzusammensetzung benötigt werden, mit Ausnahme des Vernetzungssystems, indem die Zutaten der Zusammensetzung durch Vermischen innig in die Elastomermatrix eingearbeitet werden, und anschließend
(ii) Durchführen, bei einer Temperatur, die niedriger als die Höchsttemperatur des ersten Vorgangs ist, vorzugsweise niedriger als 120 °C, eines zweiten mechanischen Verarbeitungsvorgangs, im Laufe dessen das Vernetzungssystem eingearbeitet wird,
(iii) Extrudieren oder Kalandern der auf diese Weise erhaltenen Kautschukzusammensetzung, entsprechend der angestrebten Form, um den Reifenbestandteil herzustellen,
**dadurch gekennzeichnet, dass** das Verfahren, im Vorfeld der Durchführung des oben genannten Schrittes (i) die Schritte der Herstellung des Naturkautschuks umfasst, einschließlich eines Schrittes, in welchem die Dihydrazidverbindung nach Formel I beigefügt wird.

11. Verfahren zur Herstellung eines Luftreifenbestandteils gemäß der Beschreibung in einem beliebigen der Ansprüche 1 bis 9, wobei es die folgenden Schritte umfasst:
(i) Durchführen, bei einer Höchsttemperatur im Bereich von 130 °C bis 200 °C, eines ersten thermomechanischen Verarbeitungsvorgangs der grundlegenden Inhaltsstoffe, die für die Kautschukzusammensetzung benötigt werden, mit Ausnahme des Vernetzungssystems, indem die Zutaten der Zusammensetzung durch Vermischen innig in die Elastomermatrix eingearbeitet werden, und anschließend
(ii) Durchführen, bei einer Temperatur, die niedriger als die Höchsttemperatur des ersten Vorgangs ist, vorzugsweise niedriger als 120 °C, eines zweiten mechanischen Verarbeitungsvorgangs, im Laufe dessen das Vernetzungssystem eingearbeitet wird,
(iii) Extrudieren oder Kalandern der auf diese Weise erhaltenen Kautschukzusammensetzung, entsprechend der angestrebten Form, um den Reifenbestandteil herzustellen,
**dadurch gekennzeichnet, dass** das Verfahren, im Vorfeld der Durchführung des oben genannten Schrittes (i) einen Schritt der Herstellung eines Masterbatches auf Grundlage des Naturkautschuks und der Dihydrazidverbindung nach Formel I umfasst.

12. Verfahren zur Herstellung eines Luftreifenbestandteils gemäß der Beschreibung in einem beliebigen der Ansprüche 1 bis 9, wobei es die folgenden Schritte umfasst:
(i) Durchführen, bei einer Höchsttemperatur im Bereich von 130 °C bis 200 °C, eines ersten thermomechanischen Verarbeitungsvorgangs der grundlegenden Inhaltsstoffe, die für die Kautschukzusammensetzung benötigt werden, mit Ausnahme des Vernetzungssystems, indem die Zutaten der Zusammensetzung durch Vermischen innig in die Elastomermatrix eingearbeitet werden, und anschließend
(ii) Durchführen, bei einer Temperatur, die niedriger als die Höchsttemperatur des ersten Vorgangs ist, vorzugsweise niedriger als 120 °C, eines zweiten mechanischen Verarbeitungsvorgangs, im Laufe dessen das Vernetzungssystem eingearbeitet wird,
(iii) Extrudieren oder Kalandern der auf diese Weise erhaltenen Kautschukzusammensetzung, entsprechend der angestrebten Form, um den Reifenbestandteil herzustellen,
**dadurch gekennzeichnet, dass** die Dihydrazidverbindung nach Formel I der Mischung während des Schrittes (i) zugesetzt wird.

13. Verfahren nach einem beliebigen der Ansprüche 10 bis 12, **dadurch gekennzeichnet, dass** ein Haftvermittler während des Schrittes (i) in die Elastomermatrix eingearbeitet wird.

14. Verfahren nach einem beliebigen der Ansprüche 10 bis 12, **dadurch gekennzeichnet, dass** ein Haftvermittler während des Schrittes (ii) in die Mischung eingearbeitet wird, wie sie nach Abschluss von Schritt (i) erhalten wird.

15. Luftreifen, **dadurch gekennzeichnet, dass** es sich bei mindestens einem seiner Bestandteile, die nicht mit der Luft oder einem Füllgas in Kontakt sind, um einen Bestandteil handelt, wie er in einem beliebigen der Ansprüche 1 bis 9 beschrieben ist.

## Claims

1. Tyre component which is not in contact with air or with an inflation gas, **characterized in that** it comprises a rubber composition comprising (a) an elastomeric matrix based on natural rubber, (b) a reinforcing filler, (c) from more than 2.5 to 8.5 phr of sulphur and (d) a dihydrazide compound corresponding to the following formula: 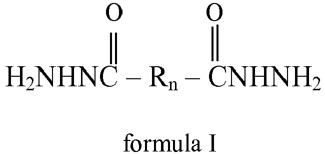 in which R is a divalent hydrocarbon radical chosen from substituted or unsubstituted aromatic radicals having 6 to 20 carbon atoms, linear or branched, saturated or unsaturated, aliphatic radicals having 2 and 20 carbon atoms, and n is equal to 0 or 1, the rubber composition comprising no isobutylene-*para*-methylstyrene-*para*-bromomethylstyrene copolymer.

2. Tyre component according to Claim 1, **characterized in that** it comprises a thread-like reinforcing element.

3. Tyre component according to Claim 2, **characterized in that** the thread-like reinforcing element is made of steel.

4. Tyre component according to any one of Claims 1 to 3 **characterized in that** the composition comprises an adhesion promoter.

5. Tyre component according to Claim 1, **characterized in that** said component is a layer adjacent to a reinforcement/rubber composite.

6. Tyre component according to any one of Claims 1 to 5, **characterized in that** the dihydrazide compound is chosen from phthalic acid dihydrazide, isophthalic acid dihydrazide, terephthalic acid dihydrazide, succinic acid dihydrazide, adipic acid dihydrazide, azelaic acid dihydrazide, sebacic acid dihydrazide, oxalic acid dihydrazide and dodecanoic acid dihydrazide.

7. Tyre component according to any one of Claims 1 to 6, **characterized in that** the natural rubber is present in the elastomeric matrix in a predominant weight fraction.

8. Tyre component according to any one of Claims 1 to 7, **characterized in that** the reinforcing filler comprises more than 50% by weight, of the total weight of the filler, of a reinforcing organic filler.

9. Tyre component according to any one of Claims 1 to 8, **characterized in that** sulphur is present in the composition in a proportion ranging from 3.5 to 7 phr.

10. Process for preparing a tyre component as described in any one of Claims 1 to 9, comprising the following steps:
(i) carrying out, at a maximum temperature of between 130°C and 200°C, a first step of thermomechanical working of the necessary base constituents of the rubber composition, with the exception of the crosslinking system, by intimate incorporation, by kneading, into the elastomeric matrix based on natural rubber, of ingredients of the composition, then
(ii) carrying out, at a temperature below said maximum temperature of said first step, preferably below 120°C, a second step of mechanical working during which said crosslinking system is incorporated,
(iii) extrusion or calendering of the rubber composition thus obtained, in the desired form, in order to manufacture the tyre component,
**characterized in that,** prior to carrying out the aforementioned stage (i), the process comprises the stages of manufacturing natural rubber comprising a stage of adding the dihydrazide compound of formula I.

11. Process for preparing a tyre component as described in any one of Claims 1 to 9, comprising the following steps:
(i) carrying out, at a maximum temperature of between 130°C and 200°C, a first step of thermomechanical working of the necessary base constituents of the rubber composition, with the exception of the crosslinking system, by intimate incorporation, by kneading, into the elastomeric matrix based on natural rubber, of ingredients of the composition, then
(ii) carrying out, at a temperature below said maximum temperature of said first step, preferably below 120°C, a second step of mechanical working during which said crosslinking system is incorporated,
(iii) extrusion or calendering of the rubber composition thus obtained, in the desired form, in order to manufacture the tyre component,
**characterized in that,** prior to carrying out the aforementioned stage (i), the process comprises a stage of preparing a masterbatch based on natural rubber and on the dihydrazide compound of formula I.

12. Process for preparing a tyre component as described in any one of Claims 1 to 9, comprising the following steps:
(i) carrying out, at a maximum temperature of between 130°C and 200°C, a first step of thermomechanical working of the necessary base constituents of the rubber composition, with the exception of the crosslinking system, by intimate incorporation, by kneading, into the elastomeric matrix based on natural rubber, of ingredients of the composition, then
(ii) carrying out, at a temperature below said maximum temperature of said first step, preferably below 120°C, a second step of mechanical working during which said crosslinking system is incorporated,
(iii) extrusion or calendering of the rubber composition thus obtained, in the desired form, in order to manufacture the tyre component,
**characterized in that** the dihydrazide compound of formula I is added to the mixture during stage (i).

13. Process according to any one of Claims 10 to 12, **characterized in that** an adhesion promoter is incorporated into the elastomeric matrix during stage (i).

14. Process according to any one of Claims 10 to 12, **characterized in that** an adhesion promoter is incorporated into the mixture resulting from stage (i), during stage (ii).

15. Tyre, **characterized in that** at least one of its components not in contact with air or with an inflation gas is a component as described in any one of Claims 1 to 9.
